# EUROPÄISCHE PATENTANMELDUNG

(11) **EP 2 894 456 A1**
(43) Veröffentlichungstag der Anmeldung: **15.07.2015**
(21) Anmeldenummer: 14199728.8
(22) Anmeldetag: 22.12.2014
(51) Int. Cl.: G01N 1/28, B01L 3/00

(54) **Mikrofluidisches System sowie Verfahren zum Vorbereiten und Analysieren einer Zellen enthaltenden Probe biologischen Materials**

(30) Priorität: 14.01.2014 DE 102014200468
(71) Anmelder: ROBERT BOSCH GMBH, 70442 Stuttgart (DE)
(72) Erfinder: Hoffmann, Jochen, 71229 Leonberg (DE); Zinober, Sven, 71292 Friolzheim (DE)

(57) **Zusammenfassung**

Die Erfindung betrifft ein mikrofluidisches System zum Vorbereiten und Analysieren einer Zellen enthaltenden Probe biologischen Materials. Das mikrofluidische System weist eine Probenbearbeitungsvorrichtung (120) aus einem mikrostrukturierbaren Material und mit einer Mehrzahl von Kavitäten (320) zum Aufnehmen der Probe auf. Dabei sind die Kavitäten (320) für eine Aufnahme von weniger als zwei Zellen der Probe pro Kavität (320) und für die Durchführung einer Mehrzahl von Teilschritten des Vorbereitens und Analysierens ausgeformt. Auch weist das mikrofluidische System eine mit der Probenbearbeitungsvorrichtung (120) koppelbare mikrofluidische Kartusche zum Zuführen der Probe und von Stoffen für das Vorbereiten und Analysieren der Probe zu der Probenbearbeitungsvorrichtung (120) auf.

## Beschreibung

### Stand der Technik

Die vorliegende Erfindung bezieht sich auf ein mikrofluidisches System zum Vorbereiten und Analysieren einer Zellen enthaltenden Probe biologischen Materials und auf ein Verfahren zum Vorbereiten und Analysieren einer Zellen enthaltenden Probe biologischen Materials.

Mikrofluidische Diagnosesysteme wie Chiplabore bzw. Labs-on-Chip (LoC) erlauben eine miniaturisierte und integrierte Durchführung komplexer fluidischer Arbeitsabläufe insbesondere für den spezifischen Nachweis verschiedenster Moleküle. Die DE 10 2009 035 270 A1 beschreibt einen Einweg-Multiplex-Polymerase-Kettenreaktions-Chip und ein Polymerase-Kettenreaktionsgerät.

### Offenbarung der Erfindung

Vor diesem Hintergrund werden mit dem hier vorgestellten Ansatz ein mikrofluidisches System zum Vorbereiten und Analysieren einer Zellen enthaltenden Probe biologischen Materials und ein Verfahren zum Vorbereiten und Analysieren einer Zellen enthaltenden Probe biologischen Materials gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der Erfindung kann insbesondere eine miniaturisierte, siliziumbasierte Array-Struktur bzw. ein Array-basiertes Lab-on-Chip-System oder anders ausgedrückt ein mikrofluidisches System für die Vorbereitung einer biologischen Probe und den anschließenden Nachweis von Biomolekülen bereitgestellt werden. Dabei kann das mikrofluidische System beispielsweise einen Chip aus einem Halbleitermaterial aufweisen, in dem ein Array von Vertiefungen ausgeformt ist, in denen eine Probenvorbereitung bzw. Probenaufbereitung sowie Analysereaktionen bzw. Nachweisreaktionen durchführbar sind. Somit kann eine Vorbereitung und Analyse der Probe ohne Transport der Probe zwischen verschiedenen Abschnitten des Chips erfolgen. Zudem können die Vertiefungen insbesondere ausgebildet sein, um bei einer Einbringung der Probe in den Chip eine zellenweise Aliquotierung zu bewirken.

Vorteilhafterweise können insbesondere mehrere Funktionalitäten eines Chiplabors mittels einer einzigen Vorrichtung mit einer arrayartigen Struktur realisiert werden. Dadurch kann eine Verringerung von Totvolumina erreicht werden, da keine Einzelfunktionsblöcke fluidisch miteinander zu verbinden sind. Ferner kann eine erhöhte Sensitivität des mikrofluidischen Systems erreicht werden, da eine zu untersuchende Probe während einer gesamten Prozesskette in einer Kammer bzw. an einer Stelle bleibt. Somit kann eine Vereinfachung der Mikrofluidik erreicht werden, da beispielsweise Volumina von Reaktionslösungen nicht abgemessen sondern lediglich über das Kavitätenarray gespült zu werden brauchen. Es können insbesondere geringe Abmessungen eines als Probenbearbeitungsvorrichtung fungierenden Siliziumchips realisiert werden.

Hierbei kann beispielsweise auf verteilte Kammern, Pumpen und Ventile verzichtet werden, wobei lediglich kleine Flächen an Silizium ausreichend sind, da Vorgänge, wie beispielsweise Zellaufschluss, DNA-Aufreinigung und Nachweis der DNA, in einem einzigen Array aus Mikrokavitäten durchgeführt werden können. Daher können fehleranfällige fluidische Strukturen mit beweglichen Teilen vermieden werden. Insbesondere kann der Chip für einen externen Anschluss in dem mikrofluidischen System mit zwei fluidischen Anschlüssen auskommen. Durch eine Verwendung von strukturiertem Silizium kann eine abformungsbedingte Untergrenze von Kavitäten in Polymeren unterschritten werden, sodass beispielsweise erreicht werden kann, dass eine Kavität eine Zelle aufnehmen kann. Dies kann eine signifikante Verbesserung der Nachweisgrenze ermöglichen.

Die Kombination von Funktionen bzw. Schritten beim Vorbereiten und Analysieren einer Probe insbesondere in einer Vorrichtung bzw. einem Chip ist unter anderem besonders günstig. Denn somit können solche Chips für Chiplabors aufgrund von durch räumliche Funktionsbündelung reduzierten Abmessungen aus einem Halbleitermaterial, beispielsweise Silizium, wirtschaftlich gefertigt werden. Insbesondere können Silizium-basierte Chiplabors die Möglichkeit bieten, neben der reinen Mikrofluidik auch MEMS-Funktionalitäten bzw. Funktionalitäten eines mikro-elektromechanischen Systems für die Prozessierung einer Probe zu realisieren.

Ein mikrofluidisches System zum Vorbereiten und Analysieren einer Zellen enthaltenden Probe biologischen Materials weist folgende Merkmale auf:
eine Probenbearbeitungsvorrichtung aus einem mikrostrukturierbaren Material und mit einer Mehrzahl von Kavitäten zum Aufnehmen der Probe, wobei die Kavitäten für eine Aufnahme von weniger als zwei Zellen der Probe pro Kavität für eine Mehrzahl von Teilschritten des Vorbereitens und Analysierens ausgeformt sind; und
eine mit der Probenbearbeitungsvorrichtung koppelbare mikrofluidische Kartusche zum Zuführen der Probe und von Stoffen für das Vorbereiten und Analysieren der Probe zu der Probenbearbeitungsvorrichtung.

Bei dem mikrofluidischen System kann es sich um ein analytisches System handeln, insbesondere ein mikrofluidisches Lab-on-Chip-System bzw. Chiplabor-System zur medizinischen Diagnostik, mikrobiologischen Diagnostik oder Umweltanalytik. Insbesondere ist auch ein Einsatz des mikrofluidischen Systems in Gestalt eines Handgerätes (ähnlich Blutzuckermessung) möglich, wodurch auch Schnelltests und mobile Einsätze möglich werden. Als Probe kann eine zu analysierende Flüssigkeit, typischerweise eine flüssige oder verflüssigte Patientenprobe, z. B. Blut, Urin, Stuhl, Sputum, Liquor, Lavage, ein ausgespülter Abstrich oder eine verflüssigte Gewebeprobe, oder eine Probe eines nichtmenschlichen Materials bezeichnet werden. Die Zellen können beispielsweise menschliche Zellen, z. B. Blutzellen oder dergleichen, tierische Zellen oder pathogene Zellen bzw. Pathogene, z. B. Viren oder

Mikroorganismen, wie z. B. Bakterien oder Pilze, umfassen, die DNA und/oder RNA als Nukleinsäuremoleküle aufweisen. Bei der Probenbearbeitungsvorrichtung kann es sich um einen Chip handeln. Das mikrostrukturierbare Material kann ein Halbleitermaterial aufweisen, insbesondere Silizium. Die Mehrzahl von Kavitäten können in einem Array angeordnet sein. Die Kavitäten können Abmessungen sowie eine Form aufweisen, die geeignet sind, um die Aufnahme von maximal einer Zelle pro Kavität zu ermöglichen. Somit kann ein Volumen einer Kavität größer als ein Volumen einer Zelle und kleiner als ein Volumen von zwei Zellen sein. Die mikrofluidische Kartusche kann einen Abschnitt zum Einbringen der Probe in das mikrofluidische System, vorgelagerte Reagenzien und eine Aktuierungseinheit aufweisen, um den Kavitäten die Probe und Stoffe für das Vorbereiten und Analysieren der Probe zuzuführen.

Gemäß einer Ausführungsform kann die Probenbearbeitungsvorrichtung innerhalb der Kavitäten eine hydrophile Oberfläche aufweisen. Hierbei kann die Probenbearbeitungsvorrichtung außerhalb der Kavitäten eine hydrophobe Oberfläche aufweisen. Dabei kann ein Kavitäten umgebende Abschnitt der Probenbearbeitungsvorrichtung eine hydrophobe Oberfläche aufweisen. Die Kavitäten können eine Geometrie aufweisen, die eine kapillare Befüllung mit der Probe begünstigt. Eine solche Ausführungsform bietet den Vorteil, dass eine wässrige Probenlösung in den Kavitäten ein Energieminimum einnimmt und somit bevorzugt die Kavitäten benetzt bzw. einfacher in die Kavitäten eingebracht werden kann.

Auch kann die Probenbearbeitungsvorrichtung zumindest eine im Bereich der Kavitäten angeordnete Bearbeitungseinrichtung zum thermischen, optischen, elektrischen, chemischen, elektrochemischen, mechanischen und zusätzlich oder alternativ elektromechanischen Bearbeiten der in den Kavitäten aufgenommenen Probe aufweisen. Die zumindest eine Bearbeitungseinrichtung kann in der Probenbearbeitungsvorrichtung integriert ausgeformt sein. Die zumindest eine Bearbeitungseinrichtung kann ausgebildet sein, um das Vorbereiten und Analysieren der Probe zu bewirken oder zumindest zu unterstützen. Dabei kann eine Bearbeitungseinrichtung ausgebildet sein, um den Inhalt einer Kavität oder mehrerer Kavitäten zu bearbeiten. Insbesondere kann die zumindest eine Bearbeitungseinrichtung ausgebildet sein, um elektrische Felder für eine Zelllyse zu erzeugen, piezoelektrische Schichten für eine Ultraschalllyse und zusätzlich oder alternativ zumindest ein Heizelement aufweisen, um beispielsweise Temperaturen für eine Polymerase-Kettenreaktion oder dergleichen zur Verfügung zu stellen. Eine solche Ausführungsform bietet den Vorteil, dass Vorbereitungs-und Analysefunktionalitäten, insbesondere in Gestalt mikroelektromechanischer Systeme, für mehrere Prozesse bereitgestellt werden können. Es ergibt sich eine verbesserte Effizienz von LoC-Funktionalitäten durch Miniaturisierung. Beispielsweise führen schon geringe Spannungen zu hohen Feldstärken, können kleine Volumina schnell erwärmt werden, kann durch geringere Diffusionswege eine biochemische Reaktionseffizienz erhöht werden und dergleichen.

Ferner kann die Probenbearbeitungsvorrichtung zumindest eine im Bereich der Kavitäten angeordnete Erfassungseinrichtung zum Erfassen einer Temperatur, einer Resonanzeigenschaft, einer optischen Eigenschaft und zusätzlich oder alternativ zumindest einer elektrischen Größe hinsichtlich der in den Kavitäten aufgenommenen Probe aufweisen. Die zumindest eine Erfassungseinrichtung kann in der Probenbearbeitungsvorrichtung integriert ausgeformt sein. Dabei kann eine Erfassungseinrichtung ausgebildet sein, um Messgrößen hinsichtlich der in den Kavitäten aufgenommenen Probe für eine Kavität oder mehrere Kavitäten zu erfassen. Die zumindest eine Erfassungseinrichtung kann zumindest einen Temperatursensor zur Regelung einer Temperiereinrichtung, Sensorelemente, z. B. DNA-FETs, zum ortsaufgelösten Detektieren eines generierten PCR-Produktes (PCR, Polymerase Chain Reaction, Polymerase-Kettenreaktion), Impedanzmessungs- oder Resonatorstrukturen für die Detektion oberflächengebundener amplifizierter Moleküle, beispielsweise Nukleinsäuren, oder dergleichen aufweisen. Eine solche Ausführungsform bietet den Vorteil, dass ein modularer Ansatz für die Funktionalisierung der Kavitäten bzw. der Probenbearbeitungsvorrichtung für eine flexible Assaygestaltung und gute Skalierbarkeit eines Komplexitätsniveaus, z. B. Start mit optischer Auswertung und späterer Integration einer elektrischen Auswertung, bereitgestellt werden kann.

Zudem kann die Probenbearbeitungsvorrichtung zumindest einen im Bereich der Kavitäten angeordneten porösen Abschnitt zum thermischen Entkoppeln der Kavitäten und zusätzlich oder alternativ zum Vergrößern einer Oberfläche der Kavitäten aufweisen. Das thermische Entkoppeln der Kavitäten kann bezüglich benachbarter Kavitäten und zusätzlich oder alternativ bezüglich einer Umgebung bzw. umgebender Abschnitte der Probenbearbeitungsvorrichtung verstanden werden. Eine solche Ausführungsform bietet den Vorteil, dass eine Zyklenzeit bei den Teilschritten der Vorbereitung und Analyse verringert werden kann bzw. eine Sensoroberfläche in den Kavitäten vergrößert werden kann.

Ein Verfahren zum Vorbereiten und Analysieren einer Zellen enthaltenden Probe biologischen Materials weist folgende Schritte auf:
Bereitstellen einer Probenbearbeitungsvorrichtung aus einem mikrostrukturierbaren Material und mit einer Mehrzahl von Kavitäten, wobei die Kavitäten für eine Aufnahme von weniger als zwei Zellen der Probe pro Kavität ausgeformt sind;
Einbringen der Probe in die Mehrzahl von Kavitäten der Probenbearbeitungsvorrichtung; und
Ausführen einer Mehrzahl von Teilschritten des Vorbereitens und Analysierens an der in die Kavitäten eingebrachten Probe.

Das Verfahren kann in Verbindung mit einer Ausführungsform des vorstehend genannten mikrofluidischen Systems vorteilhaft ausgeführt werden, um eine Zellen enthaltende Probe biologischen Materials vorzubereiten und zu analysieren.

Gemäß einer Ausführungsform können im Schritt des Ausführens ein Teilschritt des Aufschließens der Zellen der Probe, um Zielmoleküle freizusetzen, ein Teilschritt des Aufreinigens der Zielmoleküle, ein Teilschritt des Amplifizierens der Zielmoleküle und zusätzlich oder alternativ ein Teilschritt des Analysierens der Zielmoleküle ausgeführt werden. Eine solche Ausführungsform bietet den Vorteil, dass eine Mehrzahl von Bearbeitungsschritten zum Vorbereiten und Analysieren der Probe in den Kavitäten ausgeführt werden kann, ohne die Probe dafür zwischen unterschiedlichen Stellen eines mikrofluidischen Systems transferieren zu müssen.

Dabei kann im Schritt des Ausführens zumindest einer der Teilschritte durch Ansteuern zumindest einer im Bereich der Kavitäten angeordneten Bearbeitungseinrichtung der Probenbearbeitungsvorrichtung ausgeführt werden, um die in die Kavitäten eingebrachte Probe thermisch, optisch, elektrisch, chemisch, elektrochemisch, mechanisch und zusätzlich oder alternativ elektromechanisch zu bearbeiten. Die Teilschritte im Schritt des Ausführens können somit mittels bzw. unter Verwendung der zumindest einen Bearbeitungseinrichtung der Probenbearbeitungsvorrichtung ausgeführt werden. Dabei kann die zumindest eine Bearbeitungseinrichtung für eine oder mehrere Art des Bearbeitens der Probe nutzbar zu sein. Auch kann im Schritt des Ausführens zumindest einer der Teilschritte durch Ansteuern zumindest einer im Bereich der Kavitäten angeordneten Erfassungseinrichtung der Probenbearbeitungsvorrichtung ausgeführt werden, um erfassbare Parameter des Bearbeitens zu überwachen und zusätzlich oder alternativ das Analysieren der Probe zu ermöglichen oder zu unterstützen. Eine solche Ausführungsform bietet den Vorteil, dass unter Verwendung der zumindest einen Bearbeitungseinrichtung und zusätzlich oder alternativ der zumindest einen Erfassungseinrichtung die Teilschritte des Vorbereitens und des Analysierens besonders effizient und Platz sparend ausgeführt werden können.

Auch können der Probenbearbeitungsvorrichtung im Schritt des Ausführens in zumindest einem der Teilschritte durch Steuern einer mit der Probenbearbeitungsvorrichtung koppelbaren mikrofluidischen Kartusche Stoffe für das Vorbereiten und Analysieren der Probe zugeführt werden. Insbesondere können Stoffe für Amplifikationsreaktionen und/oder zum die Kavitäten abschließenden Überlagern der in den Kavitäten aufgenommenen Probe zugeführt werden. Eine solche Ausführungsform bietet den Vorteil, dass Vorbereitungs- und/oder Analyseschritte unterstützt und erleichtert werden können, wobei eine Speicherung solcher Stoffe getrennt von der Probenbearbeitungsvorrichtung erfolgen kann und somit Platz auf der Probenbearbeitungsvorrichtung eingespart werden kann.

Ferner kann das Verfahren vor dem Schritt des Einbringens der Probe einen Schritt des Anordnens von Hilfsstoffen für das Ausführen zumindest eines der Teilschritte im Schritt des Ausführens in den Kavitäten aufweisen. Insbesondere können im Schritt des Anordnens Hilfsstoffe für ein Amplifizieren und Analysieren der Probe in den Kavitäten vorgelagert bzw. vorgelegt werden. Eine solche Ausführungsform bietet den Vorteil, dass Vorbereitungs- und/oder Analyseschritte unterstützt und erleichtert werden können.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung und/oder Ansteuerung der Schritte des Verfahrens nach einer der vorstehend beschriebenen Ausführungsformen verwendet wird, insbesondere wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 ein schematisches Blockdiagramm eines mikrofluidischen Systems gemäß einem Ausführungsbeispiel der vorliegenden Erfindung;
Fig. 2 ein Ablaufdiagramm eines Verfahrens gemäß einem Ausführungsbeispiel der vorliegenden Erfindung;
Fig. 3 eine schematische Darstellung einer Probenbearbeitungsvorrichtung gemäß einem Ausführungsbeispiel der vorliegenden Erfindung; und
Figuren 4A bis 4F schematische Darstellungen von Kavitäten mit Bearbeitungseinrichtungen bzw. Erfassungseinrichtungen gemäß Ausführungsbeispielen der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

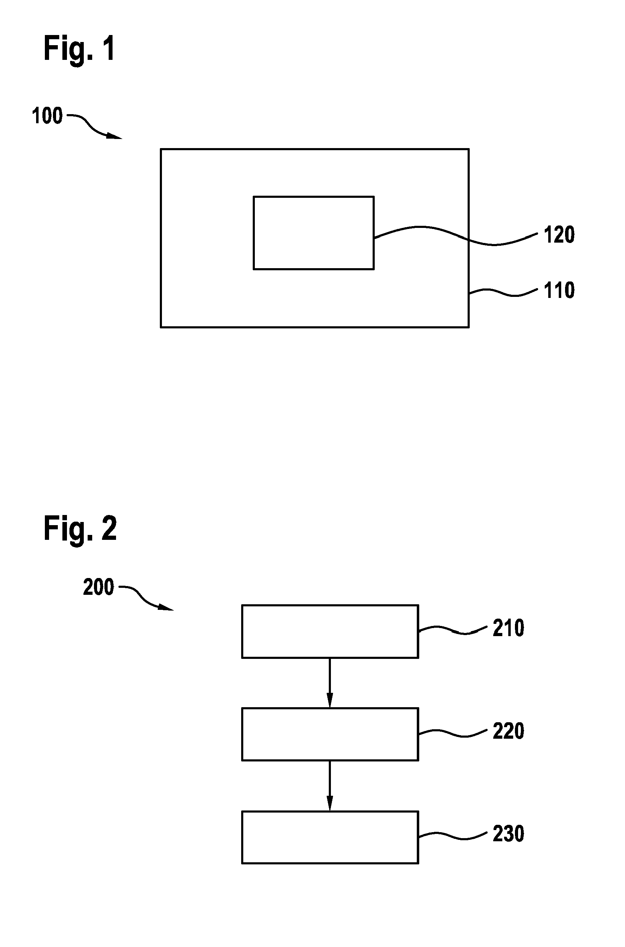

Fig. 1 zeigt ein schematisches Blockdiagramm eines mikrofluidischen Systems 100 zum Vorbereiten und Analysieren einer Zellen enthaltenden Probe biologischen Materials gemäß einem Ausführungsbeispiel der vorliegenden Erfindung. Von dem mikrofluidischen System 100 sind in Fig. 1 eine mikrofluidische Kartusche 110 und eine Probenbearbeitungsvorrichtung 120 gezeigt. Die Probenbearbeitungsvorrichtung 120 ist in der Darstellung von Fig. 1 mit der mikrofluidischen Kartusche 110 gekoppelt.

Bei dem mikrofluidischen System 100 handelt es sich um ein analytisches System, insbesondere ein mikrofluidisches Lab-on-Chip-System bzw. Chiplabor-System zur medizinischen Diagnostik, mikrobiologischen Diagnostik oder Umweltanalytik. Die Zellen enthaltende Probe weist hierbei eine zu analysierende Flüssigkeit auf, insbesondere typischerweise eine flüssige oder verflüssigte Patientenprobe, z. B. Blut, Urin, Stuhl, Sputum, Liquor, Lavage, ein ausgespülter Abstrich oder eine verflüssigte Gewebeprobe, oder eine Probe eines nichtmenschlichen Materials. Die Zellen umfassen menschliche Zellen, beispielsweise Blutzellen oder dergleichen, tierische Zellen oder pathogene Zellen bzw. Pathogene, wie Viren oder Mikroorganismen, beispielsweise Bakterien oder Pilze, die DNA und zusätzlich oder alternativ RNA als Nukleinsäuremoleküle aufweisen.

Die mikrofluidische Kartusche 110 und die Probenbearbeitungsvorrichtung 120 sind miteinander koppelbar ausgeformt. Auch wenn es in Fig. 1 nicht explizit dargestellt ist, so sind die Probenbearbeitungsvorrichtung 120 und die mikrofluidische Kartusche 110 fluidisch oder fluidisch und mechanisch miteinander koppelbar.

Die mikrofluidische Kartusche 110 ist ausgebildet, um der Probenbearbeitungsvorrichtung 120 die Probe und Stoffe für das Vorbereiten und Analysieren der Probe zuzuführen. Die mikrofluidische Kartusche 110 weist einen Abschnitt zum Einbringen der Probe in das mikrofluidische System 100, vorgelagerte Reagenzien und eine Aktuierungseinheit auf, um der Amplifikationskammer und der Nachweiskammer mit den Kavitäten die Probe und Stoffe für das Vorbereiten und Analysieren der Probe zuzuführen.

Die Probenbearbeitungsvorrichtung 120 ist aus einem mikrostrukturierbaren Material ausgeformt. Bei der Probenbearbeitungsvorrichtung 120 handelt es sich um einen Chip. Das mikrostrukturierbare Material weist beispielsweise ein Halbleitermaterial auf, insbesondere Silizium. Auch wenn es Fig. 1 nicht erkennbar ist, weist die Probenbearbeitungsvorrichtung 120 eine Mehrzahl von Kavitäten zum Aufnehmen der Probe auf. Die Mehrzahl von Kavitäten sind in einem Array angeordnet. Dabei sind die Kavitäten für eine Aufnahme von weniger als zwei Zellen der Probe pro Kavität für eine Mehrzahl von Teilschritten des Vorbereitens und Analysierens ausgeformt. Die Kavitäten weisen Abmessungen sowie eine Form auf, die geeignet sind, um die Aufnahme von maximal einer Zelle pro Kavität zu ermöglichen. Somit ist ein Volumen einer Kavität größer als ein Volumen einer Zelle und kleiner als ein Volumen von zwei Zellen.

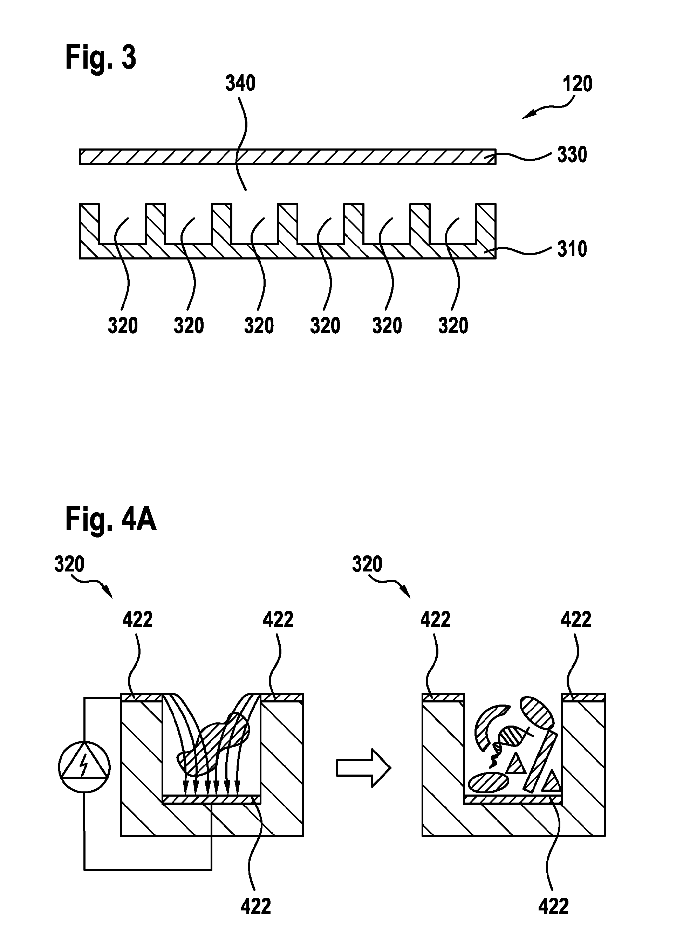

Fig. 2 zeigt ein Ablaufdiagramm eines Verfahrens 200 zum Vorbereiten und Analysieren einer Zellen enthaltenden Probe biologischen Materials gemäß einem Ausführungsbeispiel der vorliegenden Erfindung. Das Verfahren 200 ist in Verbindung mit einem mikrofluidischen System wie dem mikrofluidischen System aus Fig. 1 bzw. in Verbindung mit einer Probenbearbeitungsvorrichtung wie der Probenbearbeitungsvorrichtung aus Fig. 3 mit einer Mehrzahl von Kavitäten wie einer der Kavitäten aus den Figuren 4A bis 4F vorteilhaft ausführbar.

Das Verfahren 200 weist einen Schritt 210 des Bereitstellens einer Probenbearbeitungsvorrichtung aus einem mikrostrukturierbaren Material und mit einer Mehrzahl von Kavitäten auf. Dabei sind die Kavitäten für eine Aufnahme von weniger als zwei Zellen der Probe pro Kavität ausgeformt. Auch weist das Verfahren 200 einen Schritt 220 des Einbringens der Probe in die Mehrzahl von Kavitäten der Probenbearbeitungsvorrichtung auf. Das Verfahren 200 weist ferner einen Schritt 230 des Ausführens einer Mehrzahl von Teilschritten des Vorbereitens und Analysierens an der in die Kavitäten eingebrachten Probe auf.

Gemäß einem Ausführungsbeispiel wird im Schritt 230 des Ausführens ein Teilschritt des Aufschließens der Zellen der Probe, um Zielmoleküle freizusetzen ausgeführt. Zusätzlich oder alternativ wird im Schritt 230 des Ausführens ein Teilschritt des Aufreinigens der Zielmoleküle ausgeführt. Zusätzlich oder alternativ wird im Schritt 230 des Ausführens ein Teilschritt des Amplifizierens der Zielmoleküle ausgeführt. Zusätzlich oder alternativ wird im Schritt 230 des Ausführens ein Teilschritt des Analysierens der Zielmoleküle ausgeführt. Gemäß einem Ausführungsbeispiel wird im Schritt 230 des Ausführens zumindest einer der Teilschritte durch Ansteuern zumindest einer im Bereich der Kavitäten angeordneten Bearbeitungseinrichtung der Probenbearbeitungsvorrichtung ausgeführt, um die in die Kavitäten eingebrachte Probe thermisch, optisch, elektrisch, chemisch, elektrochemisch, mechanisch und zusätzlich oder alternativ elektromechanisch zu bearbeiten.

Gemäß einem Ausführungsbeispiel werden der Probenbearbeitungsvorrichtung im Schritt 230 des Ausführens in zumindest einem der Teilschritte durch Steuern einer mit der Probenbearbeitungsvorrichtung koppelbaren mikrofluidischen Kartusche Stoffe für das Vorbereiten und Analysieren der Probe zugeführt. Gemäß einem Ausführungsbeispiel weist das Verfahren 200 vor dem Schritt 220 des Einbringens der Probe einen Schritt des Anordnens von Hilfsstoffen für das Ausführen zumindest eines der Teilschritte im Schritt des Ausführens in den Kavitäten auf.

Fig. 3 zeigt eine schematische Schnittdarstellung eines Abschnitts oder Teilabschnitts einer Probenbearbeitungsvorrichtung 120 gemäß einem Ausführungsbeispiel der vorliegenden Erfindung. Die Probenbearbeitungsvorrichtung 120 dient zum zum Vorbereiten und Analysieren einer Zellen enthaltenden Probe biologischen Materials. Dabei handelt es sich bei der Probenbearbeitungsvorrichtung 120 um die Probenbearbeitungsvorrichtung aus Fig. 1. Somit ist die in Fig. 3 dargestellte Probenbearbeitungsvorrichtung 120 als Probenbearbeitungsvorrichtung des mikrofluidischen Systems aus Fig. 1 anwendbar. In Fig. 3 sind von der Probenbearbeitungsvorrichtung 120 ein Kavitätenarray 310, eine Mehrzahl von Kavitäten 320, ein Substrat 330 und ein mikrofluidischer Spalt 340 gezeigt.

Die Probenbearbeitungsvorrichtung 120 ist aus einem mikrostrukturierbaren Material ausgeformt. Bei der Probenbearbeitungsvorrichtung 120 handelt es sich um einen Chip. Das mikrostrukturierbare Material weist beispielsweise ein Halbleitermaterial auf, insbesondere Silizium. Die Probenbearbeitungsvorrichtung 120 weist die Mehrzahl von Kavitäten 320 zum Aufnehmen der Probe auf.

Die Mehrzahl von Kavitäten 320 sind in dem Kavitätenarray 310 ausgeformt. Die Mehrzahl von Kavitäten 320 sind arrayartig angeordnet. Dabei sind die Kavitäten 320 für eine Aufnahme von weniger als zwei Zellen der Probe pro Kavität 320 für eine Mehrzahl von Teilschritten des Vorbereitens und Analysierens ausgeformt. Die Kavitäten 320 weisen Abmessungen sowie eine Form auf, die geeignet sind, um die Aufnahme von maximal einer Zelle pro Kavität 320 zu ermöglichen. Somit ist ein Volumen einer Kavität 320 größer als ein Volumen einer Zelle und kleiner als ein Volumen von zwei Zellen.

In einem definierten Abstand zu dem Kavitätenarray 310 ist das Substrat 330 angeordnet. Zwischen dem Substrat 330 und dem Kavitätenarray 310 ist der mikrofluidische Spalt 340 angeordnet. Somit sind das Kavitätenarray 310 und das Substrat 330 durch den mikrofluidischen Spalt 340 voneinander beabstandet. Durch den mikrofluidischen Spalt 340 sind den Kavitäten 320 die Probe und Stoffe für das Vorbereiten und Analysieren der Probe zuführbar.

Gemäß einem Ausführungsbeispiel ist eine Oberfläche der Probenbearbeitungsvorrichtung 120 innerhalb der Kavitäten 320 hydrophil, wobei eine Oberfläche des Kavitätenarrays 310 außerhalb der Kavitäten 320 hydrophob ist.

Gemäß einem Ausführungsbeispiel weist die Probenbearbeitungsvorrichtung 120 zumindest eine im Bereich der Kavitäten 320 angeordnete Bearbeitungseinrichtung zum thermischen, optischen, elektrischen, chemischen, elektrochemischen, mechanischen und zusätzlich oder alternativ elektromechanischen Bearbeiten der in den Kavitäten 320 aufgenommenen Probe auf.

Gemäß einem Ausführungsbeispiel weist die Probenbearbeitungsvorrichtung 120 auch zumindest eine im Bereich der Kavitäten 320 angeordnete Erfassungseinrichtung zum Erfassen einer Temperatur, einer Resonanzeigenschaft, einer optischen Eigenschaft und zusätzlich oder alternativ zumindest einer elektrischen Größe hinsichtlich der in den Kavitäten 320 aufgenommenen Probe auf.

Gemäß einem Ausführungsbeispiel weist die Probenbearbeitungsvorrichtung 120 zumindest einen im Bereich der Kavitäten 320 angeordneten porösen Abschnitt zum thermischen Entkoppeln der Kavitäten 320 und zusätzlich oder alternativ zum Vergrößern einer Oberfläche der Kavitäten 320 auf.

Anders ausgedrückt ist das Kavitätenarray 310 aus mikrostrukturierbaren Materialien, wie beispielsweise Silizium oder Glas, mit nasschemischen Verfahren oder Trockenätzprozessen herstellbar. Definierte Bereiche der Probenbearbeitungsvorrichtung 120 bzw. des Kavitätenarrays 310 können unterschiedliche Modifikationen aufweisen, wie zum Beispiel poröses Silizium, Dotierungen, Oxide, Silane, immobilisierte Nukleinsäuren, Metallisierungen, photonische Kristalle oder Wellenleiter.

Die Kavitäten 320 weisen eine Geometrie auf, die eine kapillare Befüllung mit Flüssigkeiten begünstigt. Oberflächen von inneren Bereichen der Kavitäten 320 sind hydrophil, der Rest des Kavitätenarrays 310 hydrophob. Dies hat den Vorteil, dass eine wässrige Probenlösung in den Kavitäten 320 ein Energieminimum einnimmt und somit bevorzugt die Kavitäten 320 benetzt. In einem definierten Abstand zur einer Oberfläche der Kavitäten 320 weist das Kavitätenarray 310 das Substrat 330 auf. Durch den durch diesen Abstand gebildeten mikrofluidischen Spalt 340 sind dem Kavitätenarray 310 beispielsweise Flüssigkeiten zuführbar.

In den Kavitäten 320 sind beispielsweise unterschiedliche PCR-Primer (PCR, Polymerase Chain Reaction, Polymerase-Kettenreaktion) vorgelegt. Dabei sind die Primer beispielsweise kovalent in den Kavitäten 320 als Festphasenprimer angebunden, so dass ein Produkt der PCR an der Oberfläche der Kavitäten 320 angebunden wird. Zusätzlich sind in den Kavitäten 320 beispielsweise ungebundene Primer als Flüssigphasenprimer vorgelegt, die nach Befüllen des Kavitätenarrays 310 von der Flüssigkeit aufgenommen werden und an einer Amplifikationsreaktion teilnehmen. Zusätzlich sind gemäß einem Ausführungsbeispiel weitere Reagenzien in den Kavitäten vorgelagert, wie zum Beispiel Enzyme für eine Amplifikation eines DNA-Targets oder für eine Zelllyse, oder Additive, die eine gewünschte Reaktion begünstigen oder inhibieren.

Figuren 4A bis 4F zeigen schematische Darstellungen von Kavitäten 320 mit Bearbeitungseinrichtungen bzw. Erfassungseinrichtungen gemäß Ausführungsbeispielen der vorliegenden Erfindung. Hierbei handelt es sich bei den Kavitäten 320 um Kavitäten wie jene der Probenbearbeitungsvorrichtung aus Fig. 3. Somit sind die Kavitäten 320 aus den Figuren 4A bis 4F als die Kavitäten in dem Kavitätenarray der Probenbearbeitungsvorrichtung aus Fig. 3 bzw. Fig. 1 einsetzbar.

In den Kavitäten 320 sind insbesondere Einrichtungen für eine Freisetzung von DNA aus Zellen vorgesehen. Zu diesem Zwecke sind verschiedene Ausführungen von Bearbeitungseinrichtungen realisierbar, wie es in den Figuren 4A bis 4C gezeigt und beschrieben ist.

Dabei zeigt Fig. 4A eine Kavität 320 mit einer Bearbeitungseinrichtung, die Elektroden 422 für eine Elektroporation zum Aufschluss einer Probe aufweist, gemäß einem Ausführungsbeispiel der vorliegenden Erfindung. Dabei ist eine erste der Elektroden 422 in einem Bereich eines Bodens der Kavität 320 angeordnet, und sind zweite der Elektroden 422 im Bereich eines Randes bzw. einer Öffnung der Kavität 320 angeordnet. In einer links gezeigten Teildarstellung zeigt Fig. 4A eine in der Kavität 320 aufgenommene Zelle der Probe. Ferner ist hier zur Wirkungsweise der Bearbeitungseinrichtung ein Stromfluss von den zweiten der Elektroden 422 zu der ersten der Elektroden 422 symbolisch eingezeichnet. In einer rechts gezeigten Teildarstellung zeigt Fig. 4A die in der Kavität 320 aufgenommene Zelle in einem mittels der Elektroden 422 elektrisch aufgeschlossenen Zustand der Zelle mit einzelnen Zellbestandteilen einschließlich freigesetzter Nukleinsäuren.

Anders ausgedrückt sind eine Oberseite der Kavität 320 bzw. eine Hauptoberfläche des Kavitätenarrays sowie innere Bereiche bzw. Bodenabschnitte der Kavitäten 320 als Elektroden 422 ausgeformt. Durch Anlegen einer alternierenden oder konstanten Spannung an die Elektroden 422 können Zellen mittels Elektroporation aufgeschlossen werden.

Gemäß einem Ausführungsbeispiel ist eine Bearbeitungseinrichtung ausgebildet zum Heizen der Kavitäten 320, um Zellen thermisch aufzuschließen. Gemäß einem Ausführungsbeispiel ist eine Bearbeitungs Einrichtung ausgebildet, um einen Zellaufschluss über osmotische Effekte, z. B. eine Verwendung von hochkonzentriertem Harnstoff oder dergleichen, zu bewirken. Gemäß einem Ausführungsbeispiel ist eine Verwendung von Reagenzien, wie unter anderem EDTA, Zymolyase, Triton X-100, Toluol, Proteinase K oder Lysozym für einen Zellaufschluss vorgesehen.

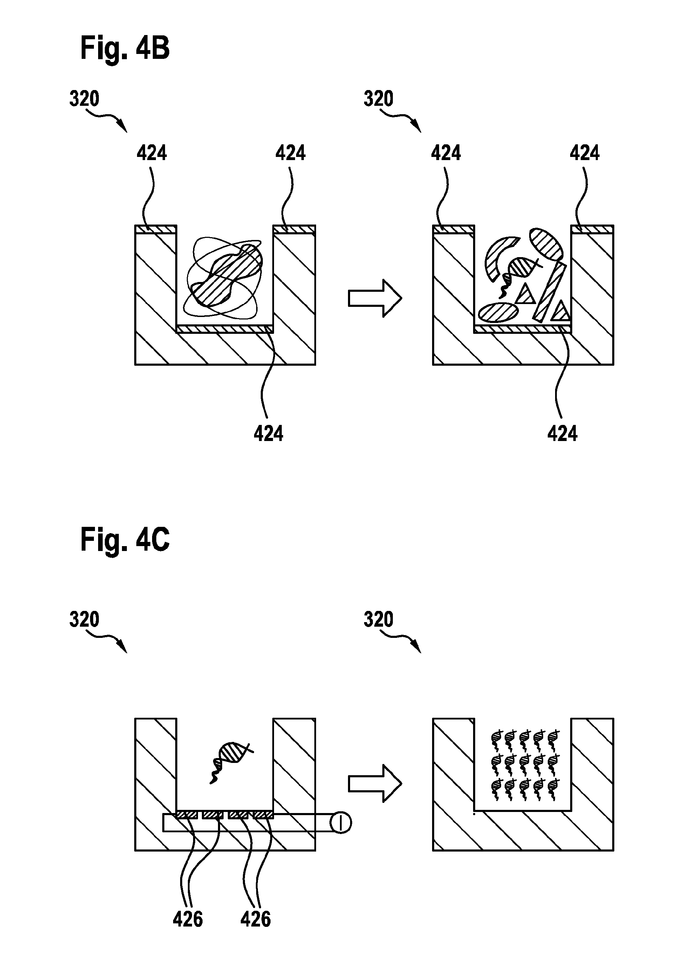

Fig. 4B zeigt eine Kavität 320 mit einer Bearbeitungseinrichtung, die Piezoelemente 424 zum Aufschluss einer Probe mittels Ultraschall aufweist, gemäß einem Ausführungsbeispiel der vorliegenden Erfindung. Dabei ist ein erstes der Piezoelemente 424 in einem Bereich eines Bodens der Kavität 320 angeordnet, und sind zweite der Piezoelemente 424 im Bereich eines Randes bzw. einer Öffnung der Kavität 320 angeordnet. In einer links gezeigten Teildarstellung zeigt Fig. 4B eine in der Kavität 320 aufgenommene Zelle der Probe. Ferner ist hier zur Wirkungsweise der Bearbeitungseinrichtung eine Ultraschalleinkopplung symbolisch eingezeichnet. In einer rechts gezeigten Teildarstellung zeigt Fig. 4B die in der Kavität 320 aufgenommene Zelle in einem mittels durch die Piezoelemente 424 erzeugtem Ultraschall aufgeschlossenen Zustand der Zelle mit einzelnen Zellbestandteilen einschließlich freigesetzter Nukleinsäuren.

Anders ausgedrückt wird gemäß dem in Fig. 4B dargestellten Ausführungsbeispiel der vorliegenden Erfindung ein mechanischer Zellaufschluss mittels durch die Piezoelemente 424 erzeugtem Ultraschall ermöglicht. Bei den Piezoelementen 424 handelt es sich hierbei um integrierte PZT-Aktoren (PZT, Blei-Zirkonat-Titanat). Es ist auch eine Unterstützung der Ultraschalllyse durch sogenannte Beads denkbar. Gemäß einem Ausführungsbeispiel ist eine Aktuierung von magnetischen Beads vorgesehen.

So können beispielsweise mittels der Bearbeitungseinrichtungen gemäß einem der in Fig. 4A bis Fig. 4B dargestellten Ausführungsbeispiel der vorliegenden Erfindung freigesetzte Nukleinsäuren, zum Beispiel DNA, in dem Kavitätenarray bzw. in der Probenbearbeitungsvorrichtung gemäß verschiedenen Mechanismen bzw. Prinzipien aufgereinigt werden bzw. können überschüssige Zellbestandteile entfernt werden. Gemäß einem Ausführungsbeispiel ist eine Beschichtung von Innenwänden der Kavitäten 320 mit einer SiO₂-Schicht als Haftschicht für DNA bei einer Festphasen-Extraktion vorgesehen. Gemäß einem Ausführungsbeispiel ist eine Fixierung der freigesetzten DNA in den Kavitäten 320 über eine Wechselwirkung eines elektrischen Feldes mit einem negativ-geladenen Phosphat-Zucker-Rückgrat der DNA vorgesehen. Gemäß einem Ausführungsbeispiel wird eine Phenol-Chloroform-Extraktion durchgeführt (Flüssigphasen-Extraktion). Hierbei werden Extraktionsreagenzien, d. h. eine organische Phase, über den mikrofluidischen Kanal über das Kavitätenarray gespült. Überschüssige Zellbestandteile diffundieren aus der wässrigen in die flüssige organische Phase, wobei die DNA in der wässrigen Phase verbleibt.

Fig. 4C zeigt eine Kavität 320 mit einer Bearbeitungseinrichtung, die Heizelemente 426 zum Durchführen einer Amplifikation an der aufgeschlossenen und aufgereinigten Probe mittels Wärme aufweist, gemäß einem Ausführungsbeispiel der vorliegenden Erfindung. Dabei sind eine Mehrzahl von Heizelementen 426 in einem Bereich eines Bodens der Kavität 320 angeordnet. In einer links gezeigten Teildarstellung zeigt Fig. 4C ein in der Kavität 320 angeordnetes Nukleinsäuremolekül der Probe. In einer rechts gezeigten Teildarstellung zeigt Fig. 4C die in der Kavität 320 amplifizierte Probe mit vervielfältigten Nukleinsäurenmolekülen. In der rechts gezeigten Teildarstellung sind in Fig. 4C die Heizelemente weggelassen.

Anders ausgedrückt ist die freigesetzte DNA mittels verschiedener Amplifikationssysteme bzw. Amplifikationsverfahren amplifizierbar. Prinzipiell sind hierfür biochemische Verfahren, wie beispielsweise PCR, LAMP, RCA, LCR, NASBA, SDA oder RPA einsetzbar. Gemäß dem in Fig. 4C dargestellten Ausführungsbeispiel der vorliegenden Erfindung wird dazu die Polymerase-Kettenreaktion (PCR) verwendet. Dafür benötigte Temperaturwechsel werden mittels der in den Kavitäten 320 integrierten Heizelemente 426 bewirkt.

Gemäß einem Ausführungsbeispiel ist ein Heizer bzw. eine Heizeinrichtung als sich über die Probenbearbeitungsvorrichtung erstreckend realisiert. Gemäß Ausführungsbeispielen ist eine thermische Bearbeitungseinrichtung beispielsweise in Gestalt eines Dünnfilmheizers, durch Aufbau des Kavitätenarrays auf einem Peltierelement, unter Verwendung eines externen Heizers oder mittels infraroter Laserdioden realisierbar.

In dem Kavitätenarray der Probenbearbeitungsvorrichtung sind gemäß Ausführungsbeispielen an definierten Stellen Temperatursensoren angeordnet, die eine Regelung der Heizelemente 426 ermöglichen, oder sind Heizelemente, wie z. B. Platin-Heizer, selbst als Temperaturfühler zur Regelung verwendbar. Gemäß einem Ausführungsbeispiel sind während der Amplifikationsreaktion die Kavitäten 320 mit Öl überschichtet und dadurch verschlossen.

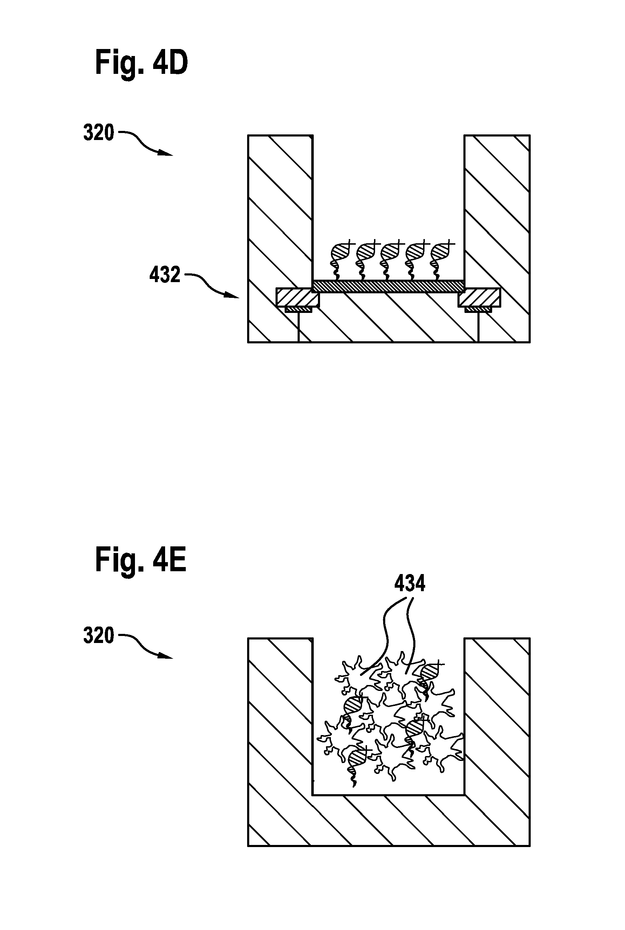

Nach der Amplifikationsreaktion wird zwischen Kavitäten 320, in denen kein Amplifikationsprodukt gebildet wurde, und Kavitäten 320, in denen ein Amplifikationsprodukt gebildet wurde, mittels verschiedener Einrichtungen bzw. Verfahren unterschieden. Zu diesem Zweck sind verschiedene Ausführungen von Erfassungseinrichtungen realisierbar, wie es in den Figuren 4D bis 4F gezeigt und beschrieben ist.

Fig. 4D zeigt eine Kavität 320 mit einer Erfassungseinrichtung, die einen DNAsensitiven Feldeffekttransistor (FET) 432 aufweist, gemäß einem Ausführungsbeispiel der vorliegenden Erfindung. Dabei ist der DNA-sensitive FET 432 in einem Bereich eines Bodens der Kavität 320 angeordnet. In der Kavität 320 ist eine amplifizierte Probe mit vervielfältigten Nukleinsäurenmolekülen angeordnet. Die Kavität 320 bzw. die Erfassungseinrichtung kann so ausgebildet sein, dass an einem Gate des DNAsensitiven FET 432 ein Amplifikationsprodukt anbindbar ist. Anhand einer damit verbundenen Veränderung in einer Gate-Spannung ist das Amplifikationsprodukt detektierbar.

Fig. 4E zeigt eine Kavität 320 und eine Erfassungseinrichtung, die fluoreszierende Stoffe 434 zur fluorometrischen Detektion von Nukleinsäuren aufweist, gemäß einem Ausführungsbeispiel der vorliegenden Erfindung. In der Kavität 320 ist eine amplifizierte Probe mit vervielfältigten Nukleinsäurenmolekülen angeordnet. Die fluoreszierende Stoffe 434 sind in der Kavität 320 angeordnet. Dabei sind die fluoreszierende Stoffe 434 mit den vervielfältigten Nukleinsäurenmolekülen in der Kavität 320 vermischt. Bei den fluoreszierende Stoffen 434 handelt es sich beispielsweise um interkalierende Farbstoffe, Sonden bzw. Marker. Dabei steht ein Anstieg eines Fluoreszenzsignals in direktem Zusammenhang mit der Menge des gebildeten Amplifikationsprodukts. Eine Amplifikationsreaktion ist unter Zugabe von interkalierendem Farbstoff oder Sonden durchführbar.

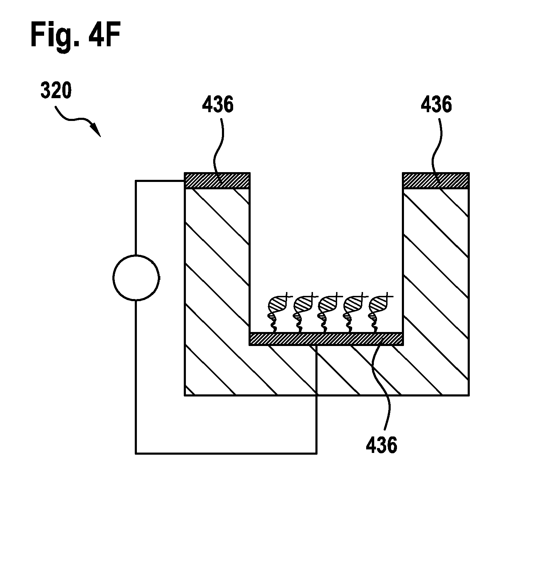

Fig. 4F zeigt eine Kavität 320 mit einer Erfassungseinrichtung, die eine Impedanzmesseinrichtung 436 aufweist, gemäß einem Ausführungsbeispiel der vorliegenden Erfindung. Dabei ist die Impedanzmesseinrichtung 436 in einem Bereich eines Bodens der Kavität 320 sowie im Bereich eines Randes bzw. einer Öffnung der Kavität 320 angeordnet. In der Kavität 320 ist eine amplifizierte Probe mit vervielfältigten Nukleinsäurenmolekülen angeordnet. Durch eine Impedanzmessung bzw. eine Messung eines Impedanzspektrums der Probe bzw. einer Reaktionsflüssigkeit in der Kavität 320 vor und nach einer Amplifikationsreaktion ist eine Verschiebung einer Resonanzfrequenz bzw. ein Auftreten reaktionsproduktmolekülspezifischer Frequenzbanden mittels der Impedanzmesseinrichtung 436 messbar.

Dabei ist mittels der Impedanzmesseinrichtung 436 beispielsweise ähnlich einem Plattenkondensator eine Änderung von dielektrischen Eigenschaften (R,C) eines Fluids in der Kavität 320 oder eine Impedanz eines mäanderförmigen Leiters durch einen Belag mit Produktmolekülen auswertbar. Gemäß einem Ausführungsbeispiel ist mittels einer als Piezomikrowaage ausgestalteten Erfassungseinrichtung eine Veränderung einer Resonanzfrequenz einer Piezo- oder Fingerstruktur messbar, wenn sich Amplifikationsprodukte an daran immobilisierte DNA-Fängermoleküle anlagern.

Unter Bezugnahme auf die Figuren 1 bis 4F wird im Folgenden zusammenfassend und mit anderen Worten ein Ausführungsbeispiel der vorliegenden Erfindung erläutert.

Die Probenbearbeitungsvorrichtung 120 des mikrofluidischen Systems umfasst ein Array 310 aus Kavitäten 320, in das eine zu untersuchende Probenlösung eingebracht wird. Im Falle einer Lösung, die Zellen, z. B. Bakterien, enthält, verteilen sich die Zellen statistisch auf die Kavitäten 320, wobei in jeweils einer Kavität 320 jeweils eine einzige Zelle zu liegen kommt. Dies ermöglicht eine signifikante Verbesserung der Nachweisgrenze.

In einem ersten Schritt der Probenbearbeitung werden beispielsweise durch Anlegen eines, beispielsweise alternierenden, elektrischen Feldes die Zellen aufgeschlossen bzw. lysiert, insbesondere mittels Elektroporation oder dergleichen.

Überschüssige Zellbestandteile werden selektiv gegenüber Nukleinsäuren durch Festphasen-Extraktion oder Flüssigphasen-Extraktion entfernt.

Nach anschließender Befüllung aller Kavitäten 320 mit einem biochemischen Amplifikationssystem wird nur in jenen Kavitäten 320, die initial eine Zelle enthielten, beispielsweise ein spezifischer DNA-Abschnitt vervielfältigt.

In einem weiteren Schritt werden jene Kavitäten 320 identifiziert, in denen ein DNA-Abschnitt vervielfältigt wurde. Diese Auswertung bzw. Erfassung erfolgt insbesondere fluorometrisch oder elektrochemisch. Über eine Anzahl an detektierten Kavitäten 320, in denen eine DNA-Sequenz vervielfältigt wurde, kann auf ein Vorhandensein eines Organismus, z. B. eines Bakteriums, in der Probenlösung rückgeschlossen werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Mikrofluidisches System (100) zum Vorbereiten und Analysieren einer Zellen enthaltenden Probe biologischen Materials, wobei das mikrofluidische System (100) folgende Merkmale aufweist:
eine Probenbearbeitungsvorrichtung (120) aus einem mikrostrukturierbaren Material und mit einer Mehrzahl von Kavitäten (320) zum Aufnehmen der Probe, wobei die Kavitäten (320) für eine Aufnahme von weniger als zwei Zellen der Probe pro Kavität (320) für eine Mehrzahl von Teilschritten des Vorbereitens und Analysierens ausgeformt sind; und
eine mit der Probenbearbeitungsvorrichtung (120) koppelbare mikrofluidische Kartusche (110) zum Zuführen der Probe und von Stoffen für das Vorbereiten und Analysieren der Probe zu der Probenbearbeitungsvorrichtung (120).

2. Mikrofluidisches System (100) gemäß Anspruch 1, **dadurch gekennzeichnet, dass** die Probenbearbeitungsvorrichtung (120) innerhalb der Kavitäten (320) eine hydrophile Oberfläche aufweist, wobei die Probenbearbeitungsvorrichtung (120) außerhalb der Kavitäten (320) eine hydrophobe Oberfläche aufweist.

3. Mikrofluidisches System (100) gemäß einem der vorangegangenen Ansprüche, **dadurch gekennzeichnet, dass** die Probenbearbeitungsvorrichtung (120) zumindest eine im Bereich der Kavitäten (320) angeordnete Bearbeitungseinrichtung (422, 424, 426) zum thermischen, optischen, elektrischen, chemischen, elektrochemischen, mechanischen und/oder elektromechanischen Bearbeiten der in den Kavitäten (320) aufgenommenen Probe aufweist.

4. Mikrofluidisches System (100) gemäß einem der vorangegangenen Ansprüche, **dadurch gekennzeichnet, dass** die Probenbearbeitungsvorrichtung (120) zumindest eine im Bereich der Kavitäten (320) angeordnete Erfassungseinrichtung (432, 434, 436) zum Erfassen einer Temperatur, einer Resonanzeigenschaft, einer optischen Eigenschaft und/oder zumindest einer elektrischen Größe hinsichtlich der in den Kavitäten (320) aufgenommenen Probe aufweist.

5. Mikrofluidisches System (100) gemäß einem der vorangegangenen Ansprüche, **dadurch gekennzeichnet, dass** die Probenbearbeitungsvorrichtung (120) zumindest einen im Bereich der Kavitäten (320) angeordneten Abschnitt zum thermischen Entkoppeln der Kavitäten (320) und/oder zum Vergrößern einer Oberfläche der Kavitäten (320) aufweist.

6. Verfahren (200) zum Vorbereiten und Analysieren einer Zellen enthaltenden Probe biologischen Materials, wobei das Verfahren (200) folgende Schritte aufweist:
Bereitstellen (210) einer Probenbearbeitungsvorrichtung (120) aus einem mikrostrukturierbaren Material und mit einer Mehrzahl von Kavitäten (320), wobei die Kavitäten (320) für eine Aufnahme von weniger als zwei Zellen der Probe pro Kavität (320) ausgeformt sind;
Einbringen (220) der Probe in die Mehrzahl von Kavitäten (320) der Probenbearbeitungsvorrichtung (120); und
Ausführen (230) einer Mehrzahl von Teilschritten des Vorbereitens und Analysierens an der in die Kavitäten (320) eingebrachten Probe.

7. Verfahren (200) gemäß Anspruch 6, **dadurch gekennzeichnet, dass** im Schritt (230) des Ausführens ein Teilschritt des Aufschließens der Zellen der Probe, um Zielmoleküle freizusetzen, ein Teilschritt des Aufreinigens der Zielmoleküle, ein Teilschritt des Amplifizierens der Zielmoleküle und/oder ein Teilschritt des Analysierens der Zielmoleküle ausgeführt wird.

8. Verfahren (200) gemäß einem der Ansprüche 6 bis 7, **dadurch gekennzeichnet, dass** im Schritt des Ausführens (230) zumindest einer der Teilschritte durch Ansteuern zumindest einer im Bereich der Kavitäten (320) angeordneten Bearbeitungseinrichtung (422, 424, 426) der Probenbearbeitungsvorrichtung (120) ausgeführt wird, um die in die Kavitäten (320) eingebrachte Probe thermisch, optisch, elektrisch, chemisch, elektrochemisch, mechanisch und/oder elektromechanisch zu bearbeiten.

9. Verfahren (200) gemäß einem der Ansprüche 6 bis 8, **dadurch gekennzeichnet, dass** der Probenbearbeitungsvorrichtung (120) im Schritt des Ausführens (230) in zumindest einem der Teilschritte durch Steuern einer mit der Probenbearbeitungsvorrichtung (120) koppelbaren mikrofluidischen Kartusche (110) Stoffe für das Vorbereiten und Analysieren der Probe zugeführt werden.

10. Verfahren (200) gemäß einem der Ansprüche 6 bis 9, **dadurch gekennzeichnet, dass** das Verfahren vor dem Schritt (220) des Einbringens der Probe einen Schritt des Anordnens von Hilfsstoffen für das Ausführen zumindest eines der Teilschritte im Schritt (230) des Ausführens in den Kavitäten (320) aufweist.

11. Vorrichtung, die ausgebildet ist, um alle Schritte eines Verfahrens gemäß einem der Ansprüche 6 bis 10 durchzuführen und/oder anzusteuern.

12. Computerprogramm, das dazu eingerichtet ist, alle Schritte eines Verfahrens einem der Ansprüche 6 bis 10 durchzuführen und/oder anzusteuern.

13. Maschinenlesbares Speichermedium mit einem darauf gespeicherten Computerprogramm nach Anspruch 12.
